# EUROPEAN PATENT APPLICATION

(11) **EP 1 919 052 A2**
(43) Date of publication of application: **07.05.2008**
(21) Application number: 07117938.6
(22) Date of filing: 05.10.2007
(51) Int. Cl.: H02H 1/04, H02H 3/00, H02H 7/085

(54) **Control device for opening/closing member**

(30) Priority: 01.11.2006 JP 2006297238
(71) Applicant: OMRON CORPORATION, Kyoto, Kyoto 600-8530 (JP)
(72) Inventor: Takahashi, Tomohiro, Omron Corporation, Shimogyo-ku, Kyoto-shi Kyoto 600-8530 (JP)
(74) Representative: Wilhelms . Kilian & Partner Patentanwälte

(57) **Abstract**

A control device for opening/closing member (100) capable of sufficiently ensuring safety with respect to infants with a simple configuration is provided.
A control unit (2) judges that the infant is randomly operating an operation switch (5a), or playing with the operation switch, when the operation switch is operated for greater than or equal to a predetermined number of times within a predetermined time. If judged that the infant is playing with the operation switch, the control unit changes a threshold value used in the judgment of whether or not entrapment of foreign object by a window glass has occurred from a normal value to a play value. The sensitivity for detecting whether or not entrapment of the foreign object by the window glass has occurred is raised.

## Description

### BACKGROUND OF THE INVENTION

### (1) Field of the Invention

The present invention relates to a control device for opening/closing member for opening/closing windows, sunroofs and the like of a vehicle.

### (2) Description of the related art

A power window device for opening/closing a window of a vehicle has been conventionally proposed. A safety function is provided to the power window device for entrapment of foreign objects such as hand by a window glass when opening/closing, in particular, when closing the window. Specifically, a function of monitoring a load of a motor that moves the window glass and judging that entrapment of foreign object by the window glass has occurred when variation of the load exceeds a threshold value defined in advance, and a function of stopping the movement of the window glass or moving the window glass in an opposite direction when judging that entrapment of foreign object has occurred are provided.

A large load sometimes acts on the power window device at a specific position when opening/closing the window due to freeze-up. In the power window device provided with the safety function, judgment is made that entrapment of foreign object has occurred at such specific position, and thus the window cannot be fully opened or fully closed. A technique of preventing such event from occurring is proposed in Japanese Laid-Open Patent Publication No. 2004-143732 and Japanese Patent Publication No. 3578568. Japanese Laid-Open Patent Publication No. 2004-143732 discloses a configuration of operating an operation switch to again close the window glass after judging that entrapment of foreign object has occurred and performing a stop or reverse control of the window glass (opening/closing member), where if the operation of the operation switch is repeated over a predetermined number of times when judgment that entrapment of foreign object has occurred is again made and the stop or reverse control of the window glass are repeated, the threshold used for judgment on whether or not entrapment of the foreign object has occurred is changed. When changing the threshold value, the initial first threshold value is changed to a second threshold value, with which judgment that the entrapment of the foreign object has occurred is more difficult to make than the first threshold value. Thus, even if a large load acts at a specific position due to freeze-up and the like when opening/closing the window, the window can be fully opened or fully closed. Furthermore, in Japanese Laid-Open Patent Publication No. 2004-143732, when a predetermined time has elapsed after changed to the second threshold value, the second threshold value is returned to the first threshold value. Moreover, Japanese Patent Publication No. 3578568 discloses a configuration where when the stop or reverse control of the window glass is performed continuously over a predetermined number of times at substantially the same location if judged that entrapment of the foreign object has occurred, the entrapment judgment of the foreign object is not performed at a relevant location. Thus, the window can be fully opened or fully closed even if a large load acts at a specific position due to freeze-up and the like when opening/closing the window.

A power window device with enhanced safety for infants also has been proposed (see Japanese Laid-Open Patent Publication No. 11-268531). Japanese Laid-Open Patent Publication No. 11-268531 discloses a configuration of detecting whether or not a person seated is an infant by means of a pressure sensor arranged in a seat, and setting the threshold value to be used in the judgment on whether or not entrapment of foreign object has occurred smaller than in normal times or having the movement amount of the window glass in the opposite direction when judgment is made that entrapment of foreign object has occurred large if the infant is seated. Judgment that entrapment of foreign object has occurred is easily made with a small threshold value. In other words, setting the threshold value small will raise the sensitivity for judging that entrapment of foreign object has occurred.

However, in Japanese Laid-Open Patent Publication No. 2004-143732 and Japanese Patent Publication No. 3578568, control, with which judgment that entrapment of foreign object by the window glass has occurred is difficult to make, is performed so that the window can be fully opened or fully closed even if a large load acts at a specific position due to freeze-up when opening/closing the window. In such control, judgment that entrapment has occurred cannot be rapidly made if the arm or the like of the infant is entrapped. Therefore, safety with respect to infants cannot be sufficiently ensured with the configurations disclosed in Japanese Laid-Open Patent Publication No. 2004-143732 and Japanese Patent Publication No. 3578568. In Japanese Laid-Open Patent Publication No. 11-268531, the threshold value used in the judgment on whether or not entrapment of foreign object has occurred is always smaller than in normal times so that judgment on whether or not entrapment of foreign object has occurred can be easily made when the infant is seated, and thus safety with respect to infants is ensured. However, since a configuration for detecting whether a person seated is an infant is required, such configuration becomes complicating and leads to increase in cost.

### SUMMARY OF THE INVENTION

It is an object of the present invention to provide a control device for opening/closing member capable of sufficiently ensuring safety with respect to infants with a simple configuration.

In order to overcome the above problems, a control device for opening/closing member of the present invention has the following configuration.

(1) A control device for opening/closing member includes a movement instruction outputting unit for outputting a movement instruction of the opening/closing member according to an operation of an operation switch; a driving unit for driving a motor and moving the opening/closing member based on the movement instruction of the opening/closing member output by the movement instruction outputting unit; an entrapment judging unit for judging whether or not entrapment of foreign object by the opening/closing member has occurred when the opening/closing member is being moved by the motor with a sensitivity set at a relevant point as a reference; a drive limiting unit for instructing the driving unit to stop the drive of the motor or drive in reverse rotation of the motor if judged that entrapment of the foreign object by the opening/closing member has occurred by the entrapment judging unit; and a sensitivity changing unit for raising the sensitivity for judging that entrapment of the foreign object by the opening/closing member has occurred by the judging unit when the operation switch is repeatedly operated over greater than or equal to a predetermined number of times within a predetermined time.

In such configuration, the sensitivity changing unit judges that the infant is randomly operating the operation switch from curiosity, that is, the infant is playing with the operation switch when the operation switch is repeatedly operated for greater than or equal to a predetermined number of times (e.g., five times) within a predetermined time (e.g., five seconds), and raises the sensitivity for judging that entrapment of foreign object by the opening/closing member has occurred. Thus, when an infant's arm gets entrapped while playing with the operation switch, judgment that entrapment has occurred can be rapidly made. Therefore, safety with respect to the infant can be sufficiently ensured. A configuration of judging whether the infant is playing with the operation switch can be realized with software, and thus increase in cost of the main body can be suppressed.

(2) The sensitivity changing unit is a unit for changing the sensitivity of a load variation of the motor used in judging whether or not entrapment of the foreign object by the opening/closing member has occurred; and the entrapment judging unit is a unit for judging whether or not entrapment of the foreign object by the opening/closing member has occurred based on whether the load variation of the motor exceeds the sensitivity of the load variation of the motor set at the relevant point.

According to such configuration, the sensitivity for judging whether or not entrapment of the foreign object by the opening/closing member has occurred can be changed by changing the sensitivity of the load variation.

(3) A control device for opening/closing member includes a movement instruction outputting unit for outputting a movement instruction of the opening/closing member according to an operation of an operation switch; a driving unit for driving a motor and moving the opening/closing member based on the movement instruction of the opening/closing member output by the movement instruction outputting unit; and a drive limiting unit for limiting the movement instruction of the opening/closing member corresponding to the operation of the operation switch output by the movement instruction outputting unit when the operation switch is repeatedly operated over greater than or equal to a predetermined number of times within a predetermined time.

According to such configuration, the drive limiting unit judges that the infant is randomly operating the operation switch from curiosity, that is, the infant is playing with the operation switch when the operation switch is repeatedly operated for greater than or equal to a predetermined number of times (e.g., five times) within a predetermined time (e.g., five seconds), and limits the movement instruction of the opening/closing member corresponding to the operation of the operation switch. For instance, when the closing operation of the opening/closing member is performed with the operation switch, such closing operation is invalidated and the movement of the opening/closing member by the driving unit is prohibited. The movement speed of the opening/closing member by the driving unit is set to low speed. Thus, similar to (1) described above, safety with respect to playing of operation switch of the infant can be ensured and increase in cost of the main body can be suppressed.

(4) A control device for opening/closing member according to any one of claims 1 to 3, further including a notifying unit for notifying when the operation switch is repeatedly operated for greater than or equal to the predetermined number of times within the predetermined time.

According to such configuration, the playing of operation switch by the infant is rapidly notified to the guardian and the like. That is, the guardian and the like can rapidly respond to the playing of operation switch of the infant.

According to the present invention, safety with respect to playing of operation switch of the infant can be ensured and increase in cost of the main body can be suppressed.

### BRIEF DESCRIPTION OF THE DRAWINGS

FIG. 1 shows a schematic view of a window opening/closing mechanism in a power window device according to an embodiment of the present invention;
FIG. 2 shows a view of a configuration of main parts of the power window device of the embodiment of the present invention;
FIG. 3 shows a flowchart of an operation of the power window device according to the embodiment of the present invention;
FIG. 4 shows a flowchart of an opening/closing process in the power window device according to the embodiment;
FIG. 5 shows a flowchart of a manual opening process in the power window device according to the embodiment;
FIG. 6 shows a flowchart of the manual opening process in the power window device according to the embodiment;
FIG. 7 shows a flowchart of a sensitivity changing process in the power window device according to the embodiment;
FIG. 8 shows a flowchart of an automatic opening process in the power window device according to the embodiment;
FIG. 9 shows a flowchart of the automatic opening process in the power window device according to the embodiment;
FIG. 10 shows a flowchart of the automatic opening process in the power window device according to the embodiment;
FIG. 11 shows a flowchart of the automatic opening process in the power window device according to the embodiment;
FIG. 12 shows a flowchart of a manual closing process in the power window device according to the embodiment;
FIG. 13 shows a flowchart of the manual closing process in the power window device according to the embodiment;
FIG. 14 shows a flowchart of an automatic closing process in the power window device according to the embodiment;
FIG. 15 shows a flowchart of the automatic closing process in the power window device according to the embodiment;
FIG. 16 shows a flowchart of the automatic closing process in the power window device according to the embodiment;
FIG. 17 shows a flowchart of the automatic closing process in the power window device according to the embodiment;
FIG. 18 shows a view describing a method of raising sensitivity in a power window device of another embodiment;
FIG. 19 shows a flowchart of an operation of the power window device of another embodiment;
FIG. 20 shows a flowchart of a movement speed changing process in the power window device of another embodiment; and
FIG. 21 shows a flowchart of a sensitivity changing process in the power window device of another embodiment.

### DETAILED DESCRIPTION OF THE PREFERRED EMBODIMENTS

An embodiment of a power window device applied with a control device for opening/closing member according to the present invention will now be described.

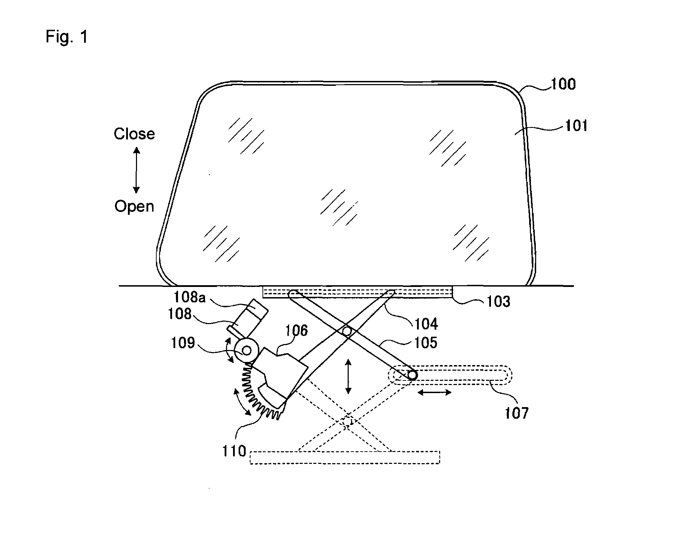

FIG. 1 shows a view of a schematic configuration of a window opening/closing mechanism in a power window device according to an embodiment of the present invention. The window opening/closing mechanism opens/closes a window 100 by raising or lowering a window glass 101. The window glass 101 is raised or lowered by a motor 108 serving as an electrical motor. A supporting member 103 for supporting the window glass 101 is attached to the lower end of the window glass 101. A first arm 104 and a second arm 105 are engaged to the supporting member 103. The first arm 104 has a first end engaging the supporting member 103 and a second end rotatably supported by a bracket 106. The second arm 105 has a first end engaging the supporting member 103 and a second end engaging a guide member 107. The first arm 104 and the second arm 105 are connected in a freely turning manner at a middle point as shown in the figure. A pinion 109 is rotatably driven by the motor 108. A gear 110 rotates by gearing with the pinion 109. As illustrated, the gear 110 has a fan shape. The gear 110 is fixed to the first arm 104. The motor 108 is rotatable in forward and reverse directions, where the pinion 109 and the gear 110 are rotated through rotation in the forward and reverse directions to turn the first arm 104 in the forward and reverse directions. Following thereto, the second end of the second arm 105 is sled in a lateral direction along a groove of the guide member 107. As a result, the supporting member 103 moves in an up and down direction and raises and lowers the window glass 101, thereby opening/closing the window 100. An encoder 108a is arranged in the motor 108.

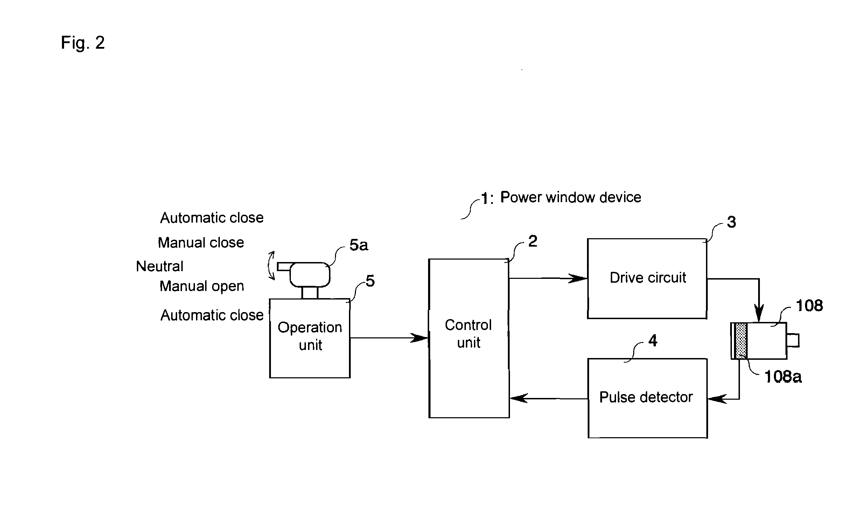

FIG. 2 shows a view of a configuration of main parts of the power window device of the embodiment. The power window device 1 of the present embodiment includes a control unit 2 for controlling the opening/closing of the window 100. The control unit 2 outputs an opening/closing command of the window 100 to a drive circuit 3. The drive circuit 3 drives the motor 108 based on the opening/closing command of the window 100 input from the control unit 2, and raises or lowers the window glass 101. A pulse detector 4 performs a waveform shaping process on an output signal of the encoder 108a arranged in the motor 108, and inputs a pulse signal performed with the waveform shaping process to the control unit 2. The control unit 2 detects a rotation speed of the motor 108 from a frequency of the pulse signal input from the pulse detector 4, and detects a load variation of the motor 108 from a frequency variation of the pulse signal. An operation unit 5 includes an operation switch 5a that is operated when opening/closing the window 100. The operation unit 5 inputs a signal corresponding to an operation state of the operation switch 5a to the control unit 2. There are five operation states of the operation switch 5a, neutral, manual open, automatic open, manual close, and automatic close. Neutral is a state in which the operation switch 5a is neutral. Manual open is a state in which a pushed amount of the operation switch 5a is within a constant range and automatic open is a state in which the pushed amount of the operation switch 5a exceeds the constant range. Manual close is a state in which a pulled amount of the operation switch 5a is within a constant range and automatic close is a state in which the pulled amount of the operation switch 5a exceeds the constant range. The operation unit 5 inputs three logic signals, open signal, close signal and automatic signal, which change according to the operation state of the operation switch 5a, to the control unit 2. The control unit 2 determines the operation state of the operation switch 5a from the three logic signals of open signal, close signal, and automatic signal.

The control unit 2 performs the opening/closing operation of the window 100 by manual opening process, automatic opening process, manual closing process, and automatic closing process based on the operation state of the operation switch 5a. The manual opening process is a process in which the operation state of the operation switch 5a is at manual open to lower the window glass 101 until the window 100 is fully opened. The manual closing process is a process in which the operation state of the operation switch 5a is at manual close to raise the window glass 101 until the window 100 is fully closed. The automatic opening process is a process of lowering the window glass 100 until the window 100 is fully opened or until the operation state of the operation switch 5a is at manual close or automatic close. The automatic closing process is a process of raising the window glass 101 until the window 100 is fully closed or until the operation state of the operation switch 5a is at manual open or automatic open. However, if judged that entrapment of foreign object by the window glass 101 being raised or lowered has occurred while opening/closing the window 100, the control unit 2 performs an error process of moving the window glass 101 in the opposite direction and stops the process being executed.

A function of judging whether or not entrapment of foreign object by the window glass 101 has occurred in the control unit 2 will now be described. The control unit 2 judges whether or not entrapment has occurred based on the frequency variation of the pulse signal obtained by waveform shaping the output signal of the encoder 108a in the pulse detector 4. The frequency of the pulse signal obtained by waveform shaping the output signal of the encoder 108a in the pulse detector 4 is proportional to the rotation speed of the motor 108. The drive circuit 3 maintains the power to supply per unit time to the motor 108 constant while a command related to raising or lowering the window glass 101 is being issued from the control unit 2. Thus, the motor 108 rotates at a constant speed if there is no load variation. The control unit 2 judges that entrapment of foreign object by the window glass 101 occurred when the variation in frequency of the pulse signal exceeds a set threshold value (threshold value C). The variation in frequency of the pulse signal is a difference (B-A) between a frequency A at a relevant time point and a frequency B earlier by a constant (X1) time defined in advance.

Entrapment of foreign object by the window glass 101 may be judged when the frequency of the pulse signal obtained by waveform shaping the output signal of the encoder 108a in the pulse detector 4 becomes lower than the frequency defined in advance. However, since the load on the motor 108 is changed by aged change of mechanism units shown in FIG. 1, environment temperature, and the like, judgment is more preferably made using the difference.

The power window device 1 of the present embodiment judges whether the infant is randomly operating the operation switch 5a, that is, whether the infant is playing with the operation switch 5a. If judged that infant is playing with the operation switch 5a, the sensitivity for judging that entrapment by the window glass 101 has occurred is raised. Raising the sensitivity means judging that entrapment of foreign object by the window glass 101 has occurred with smaller load variation. In other words, entrapment of foreign object by the window glass 101 is more easily judged. Specifically, the threshold value C is replaced from the normal value to a play value, which is a value smaller than the normal value, if judged that the infant is playing with the operation switch 5a. The power window device 1 of the present embodiment judges that infant is playing with the operation switch 5a when the operation switch 5a is operated over a predetermined number of times, five or more times in the present embodiment, within a predetermined time defined in advance, five seconds in the present embodiment. The predetermined time and the predetermined number of times may be arbitrarily set as long as they are hardly performed in the normal operation and playing of operation switch by infant can be rapidly and accurately detected. Therefore, occurrence of entrapment is rapidly judged when the window glass 101 entraps hand or foreign object such as sleeve of clothes of the infant playing with the operation switch 5a by raising the sensitivity if judged that the operation switch 5a has been played by the infant. Therefore, safety with respect to the playing of operation switch of the infant is ensured.

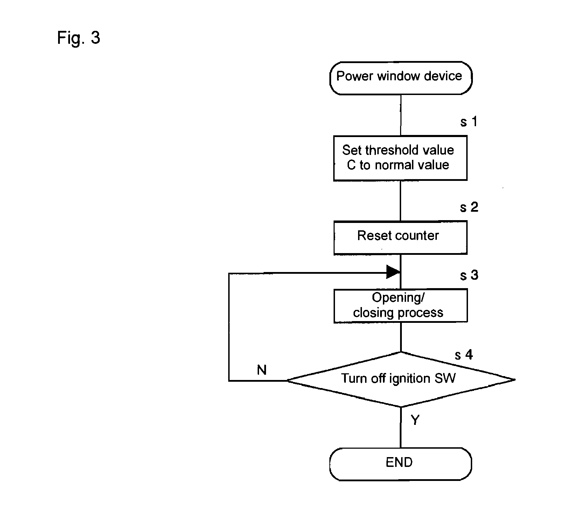

The operation of the power window device 1 of the embodiment will now be described. The power window device 1 of the embodiment is activated when the ignition switch of the vehicle on which it is mounted is turned ON and is stopped when turned OFF. FIG. 3 shows a flowchart of the operation of the power window device. When the ignition switch is turned ON, the power window device 1 starts the processes shown in FIG. 3. When the ignition switch is turned ON, the control unit 2 sets the threshold value C used in judging whether or not entrapment of foreign object by the window glass 101 has occurred to a normal value (s1). The control unit 2 then resets a counter counting the operated number of times of the operation switch 5a (s2). The processes of s1 and s2 are processes related to initial setting of a memory (not shown) arranged in the control unit 2. When the processes of s1 and s2 are completed, the control unit 2 performs the opening/closing process for opening/closing the window 100 according to the operation of the operation switch 5a until the ignition switch is turned OFF (s3, s4).

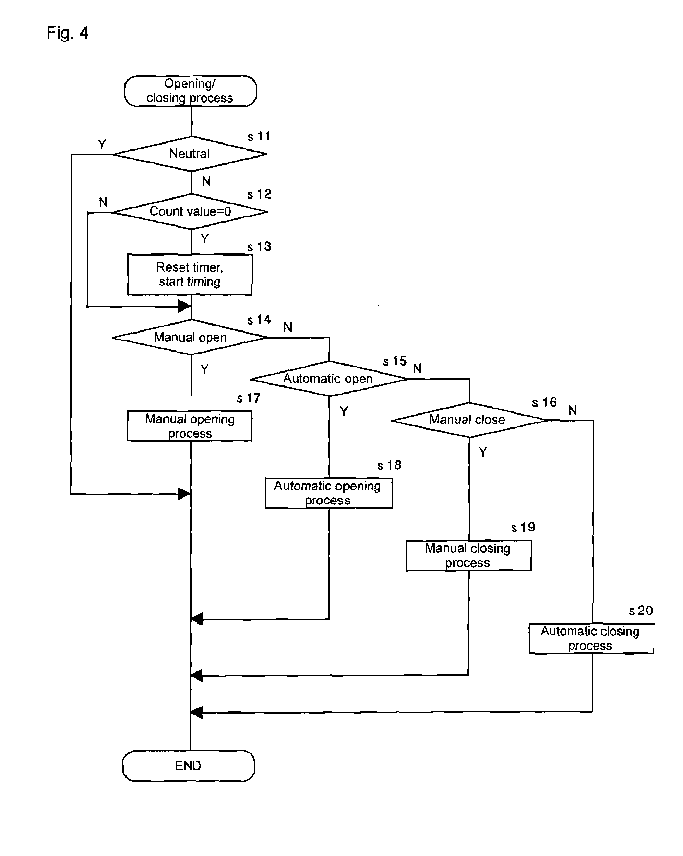

FIG. 4 shows a flowchart of the opening/closing process in s3 of the power window device of the embodiment. The control unit 2 judges whether the operation state of the operation switch 5a input from the operation unit 5 is neutral (s11). If judged that the operation state is neutral in s11, the control unit 2 ends the relevant process and judges whether or not the ignition switch is turned OFF in s4 described above. If the ignition switch is not turned OFF, the opening/closing process shown in FIG. 4 is again executed. In other words, the opening/closing process shown in FIG. 4 is repeatedly executed until the ignition switch is turned OFF.

If judged that the operation state is not neutral in s11, that is, when some kind of operation is performed on the operation switch 5a, the control unit 2 judges whether the count value of the counter (not shown) counting the operated number of times of the operation switch 5a is 0 (s12). If judged that the count value is 0 in s12, the power window device 1 resets a timer (not shown), starts timing by the timer (s13), and executes the processes after s14. The counter and the timer are arranged in the control unit 2. If judged that the count value is not 0 in s12, the control unit 2 executes the processes after s14 without performing the process of s13. The control unit 2 judges which operation state of the operation switch 5a is at, that is, whether at manual open, automatic close, manual close, or automatic close (s14 to s16), and proceeds to the opening/closing process of the window 100 corresponding to the operation state of the operation switch 5a judged at this stage (s17 to s20). Specifically, the control unit 2 proceeds to the manual opening process if the operation state of the switch 5a is manual open, and proceeds to the automatic opening process if the operation state is automatic open. Furthermore, the control unit proceeds to the manual closing process if the operation state is manual close and proceeds to the automatic closing process if the operation state is automatic close (if not manual open, automatic open, or manual close).

The manual opening process, the automatic opening process, the manual closing process, and the automatic closing process will now be described in this order.

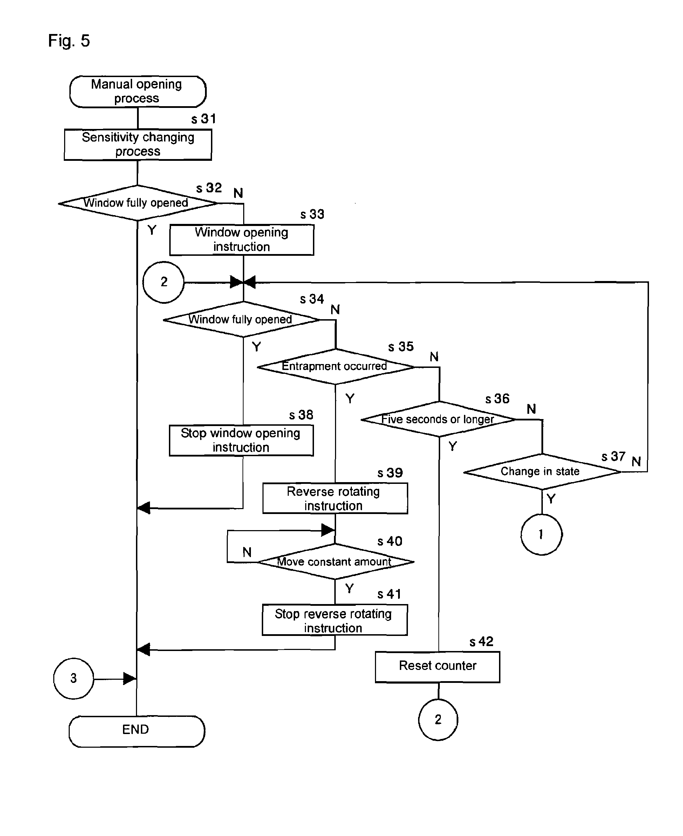

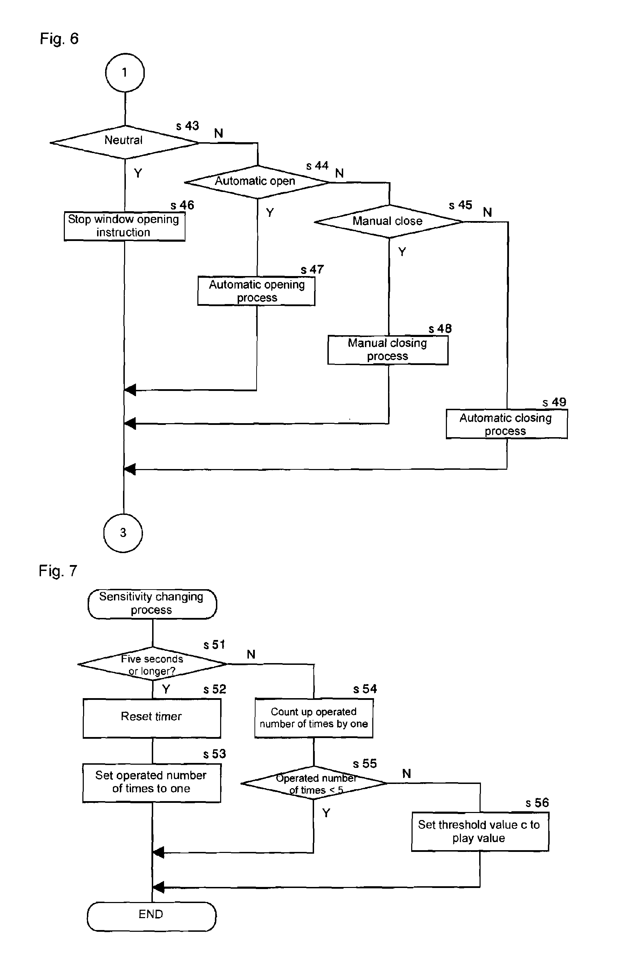

FIGS. 5 and 6 show flowcharts of the manual opening process in the power window device of the embodiment. The control unit 2 judges whether or not the infant is randomly operating the operation switch 5a (whether the infant is playing with the operation switch 5a), and executes a sensitivity changing process of raising the sensitivity for judging that entrapment by the window glass 101 has occurred when the infant is playing with the operation switch 5a (s31). FIG. 7 shows a flowchart of the sensitivity changing process. The control unit 2 judges whether the time timed by the timer is longer than or equal to a predetermined time defined in advance, that is, five seconds in the present embodiment (s51). If the timed time is longer than or equal to five seconds, the control unit 2 resets the timer (s52), and sets the count value of the counter counting the operated number of times of the operation switch 5a to 1 (s53). In s52 and s53, the setting for counting the number of times the operation switch 5a has been operated during the five seconds or the predetermined time with the relevant timing as the reference is performed. If judged that the timed time is less than five seconds in s51, the control unit 2 counts up the count value of the counter counting the operated number of times of the operation switch 5a by 1 (s54). In s54, the operated number of times of the operation switch 5a in a period until five seconds has elapsed from the timing that previously served as a reference is counted. The control unit 2 judges whether the operated number of times of the operation switch 5a that has been counted up by 1 in s54 is less than five times (s55). In s55, judgment is made on whether the operation switch 5a has been operated for five or more times during the five seconds. If judged that the operated number of times is less than five in s55, the control unit ends the present process. If the operated number of times is five or more, the control unit 2 judges that the infant is playing with the operation switch 5a, and sets the threshold value C used in judging whether or not entrapment of foreign object by the window glass 101 has occurred to the play value (s56), and then ends the process. According to the process performed in s56, the sensitivity for judging whether or not entrapment of foreign object by the window glass 101 has occurred is raised.

After the sensitivity changing process is completed in s31, the control unit 2 judges whether or not the window 100 is fully opened (s32). If the window 100 is fully opened, the control unit 2 ends the present process. If the window 100 is not fully opened, the control unit 2 makes a window opening instruction to the drive circuit 3 to drive the motor 108 in a direction of opening the window 100, that is, in a direction of lowering the window glass 101 (s33). The drive circuit 3 then drives the motor 108 to lower the window glass 101.
The drive circuit 3 maintains the power supplied per unit time to the motor 108 constant.

After performing the window opening instruction in s33, the control unit 2 waits until the window 100 is fully opened (s34), entrapment of foreign object by the window glass 101 occurs (s35), the timed time of the timer reaches five seconds or longer (s36), or the operation state of the operation switch 5a changes from the manual open to another state (s37). If judged that the window 100 is fully opened in s34, the control unit 2 stops the window opening instruction on the drive circuit 3 (s38), and ends the present process. The drive circuit 3 stops driving the motor 108 when the window opening instruction is stopped by the control unit 2. If judged that entrapment of foreign object by the window glass 101 occurred in s35, the control unit 2 makes reverse rotating instruction instructing the reverse rotation drive of the motor 108 to the drive circuit 3 (s39). While the window 100 is being opened, judgment that entrapment of foreign object by the window glass 101 has occurred is made when the foreign object such as sleeve of clothes is pulled into an accommodating part of the window glass 101. In s39, instruction is made to the drive circuit 3 to drive the motor 108 in a direction of closing the window 100, that is, in a direction of raising the window glass 101. The drive circuit 3 drives the motor 108 in the direction of raising the window glass 101. The foreign object such as sleeve of clothes that had been pulled into the accommodating part of the window glass 101 is thereby fed out from the accommodating part. Therefore, the foreign object entrapped in the window glass 101 can be easily removed. The control unit 2 waits for the window glass 101 to rise a constant amount defined in advance (s40), stops the reverse rotating instruction to the drive circuit 3 (s41), and ends the present process.

The control unit 2 detects the load variation of the motor 108 and judges that entrapment of foreign object by the window glass 101 has occurred when the variation exceeds the set threshold value C. As described above, the control unit 2 judges that entrapment of foreign object by the window glass 101 has occurred when the variation in the frequency of the pulse signal obtained by waveform shaping the output signal of the encoder 108 in the pulse detector 4 exceeds the set threshold value C. The threshold value C used in the judgment in this case is either the normal value set at the relevant time point or the play value. The threshold value is set to the normal value when the ignition switch is turned ON. However, if judged that the infant is randomly operating the operation switch 5a or playing with the operation switch 5a in the sensitivity changing process described above after the ignition switch is turned ON, change of setting of replacing the threshold value C from the normal value to the play value is performed.

If judged that the timed time of the timer has reached five seconds or longer in s36, the control unit 2 resets the counter counting the operated number of times of the operation switch 5a (s42), and returns to s34. After the counter is reset in s42, the process of s42 is performed every time judgment in s36 is performed, but this does not arise any problem. Furthermore, the judgment process in s36 may not be performed after the counter is reset in s42. That is, after the counter is reset in s42, only the judgments in s34, s35, and s37 may be performed. The process in s36 thus will not be unnecessarily repeated, and a load of the control unit 2 can be reduced.

If judged that the operation state of the operation switch 5a is changed from the manual open to another state in s37, the control unit 2 executes the processes shown in FIG. 6. Judgment is made on whether a changed operation state of the operation state 5a is neutral, automatic open, manual open, or automatic close (s43 to s45). If the changed operation state of the operation switch 5a is neutral, the control unit 2 stops the window opening instruction to the drive circuit 3 (s46), and ends the present process. S46 is a process same as s38 described above. If the changed operation state of the operation switch 5a is one of automatic open, manual close, or automatic close, the control unit 2 proceeds to one of the automatic opening process, the manual closing process, or the automatic closing process corresponding to the relevant operation state (s47 to s49).

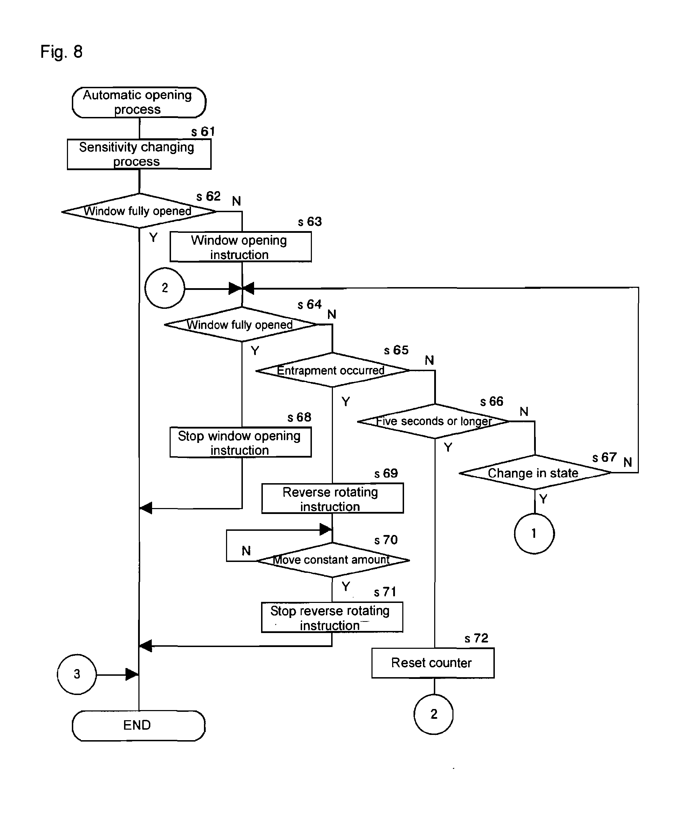

The automatic opening process in the power window device of the present embodiment will now be described. FIGS. 8 to 11 show flowcharts of the automatic opening process. The control unit 2 executes the sensitivity changing process shown in FIG. 7 (s61). The control unit 2 judges whether the window 100 is fully opened (s62), and ends the present process if the window 100 is fully opened. If the window 100 is not fully opened, the control unit 2 makes the window opening instruction instructing the drive circuit 3 to drive the motor 108 in the direction of opening the window 100, that is, in the direction of lowering the window glass 101 (s63). The drive circuit 3 then drives the motor 108 to lower the window glass 101. Subsequently, the control unit 2 performs the processes similar to s34 to s42 described in the manual opening process in s64 to s72. However, in s67, judgment is made on whether the operation state of the operation switch 5a is changed to the state other than automatic open.

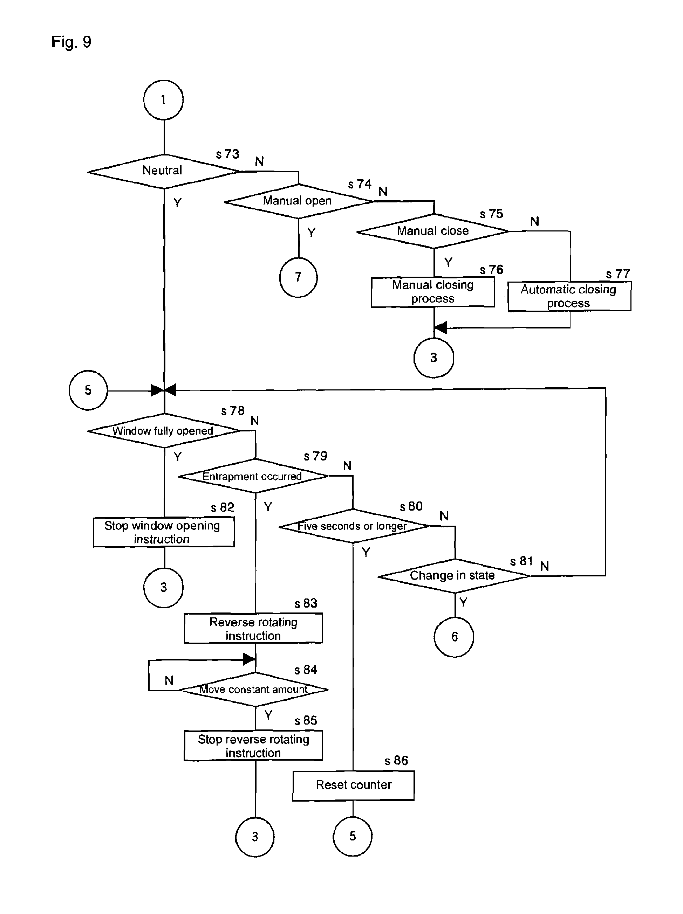

If judged that the operation state of the operation switch 5a is changed from automatic open to another state in s67, the control unit 2 executes the processes shown in FIG. 9. Judgment is made on whether the changed operation state of the operation state 5a is neutral, manual open, manual close, or automatic close (s73 to s75). If the changed operation state of the operation switch 5a is either manual close or automatic close, the control unit 2 proceeds to the manual closing process or the automatic closing process corresponding to the relevant operation state (s76, s77). If the changed operation state of the operation switch 5a is neutral, the control unit 2 waits until the window 100 is fully opened (s78), entrapment of foreign object by the window glass 101 occurs (s79), the timed time of the timer reaches five seconds or longer (s80), or the operation state of the operation switch 5a changes from neutral to another state (s81).

If judged that the window 100 is fully opened in s78, the control unit 2 stops the window opening instruction to the drive circuit 3 (s82), and ends the present process. Furthermore, when detecting entrapment of foreign object by the window glass 101 in s79, the control unit 2 performs the processes in s39 to s41 described in the manual opening process in s83 to s85. Moreover, if judged that the timed time of the timer has reached five seconds or longer in s80, the control unit 2 resets the counter counting the operated number of times of the operation switch 5a (s86), and returns to s78,

A case when the changed operation state of the operation switch 5a is judged as manual open in s74 will be described hereinafter.

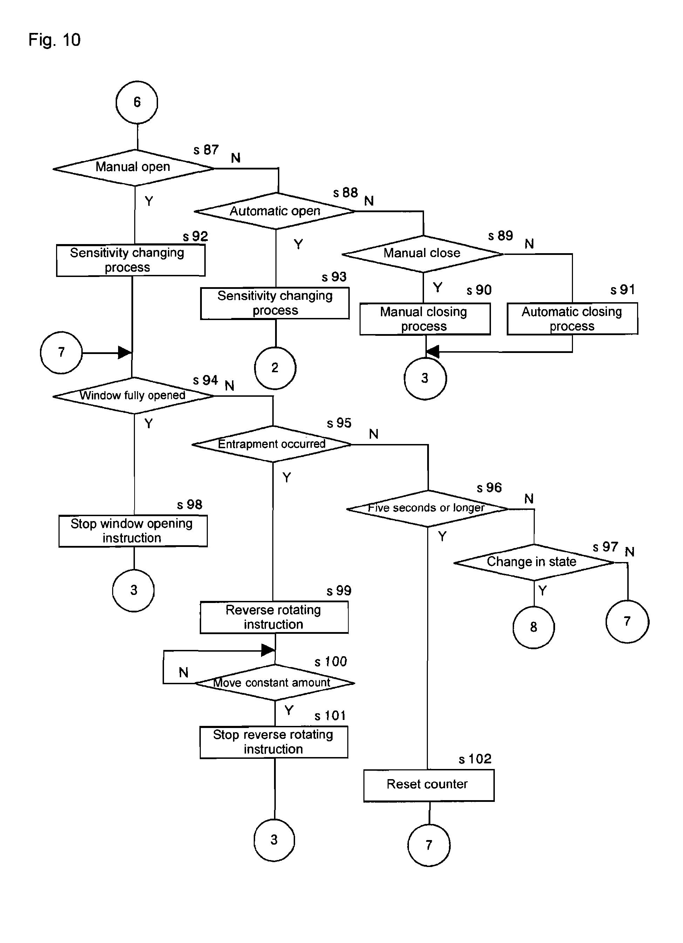

If judged that the operation state of the operation switch 5a is changed from neutral to another state in s81, the control unit 2 executes the processes shown in FIG. 10. Judgment is made on whether the changed operation state of the operation state 5a is manual open, automatic open, manual close, or automatic close (s87 to s89). Judgment is made as automatic close if the changed operation state of the operation state 5a is none of manual open, automatic open, or manual close. If the changed operation state of the operation switch 5a is either manual close or automatic close, the control unit 2 proceeds to the manual closing process or the automatic closing process corresponding to the relevant operation state (s90, s91).

If the changed operation state of the operation switch 5a is automatic open, the control unit 2 executes the sensitivity changing process shown in FIG. 7 (s93), and returns to s64. Since the sensitivity changing process is performed in s93, the operated number of times of the operation switch 5a can be appropriately counted, and as a result, judgment precision on whether or not the infant is playing with the operation switch 5a can be ensured. If the changed operation state of the operation switch 5a is manual open, the control unit 2 executes the sensitivity changing process shown in FIG. 7 (s92). The control unit 2 waits until the window 100 is fully opened (s94), entrapment of foreign object by the window glass 101 occurs (s95), the timed time of the timer timing the judgment time reaches five seconds or longer (s96), or the operation state of the operation switch 5a changes from manual open to another state (s97). In this case as well, judgment precision on whether or not the infant is playing with the operation switch 5a can be ensured since the sensitivity changing process is performed in s92. Furthermore, if judged that the changed operation state of the operation switch 5a is manual open in s74, the control unit 2 executes the processes after s94. The control unit 2 sometimes detects that the operation state of the operation switch 5a is temporarily at manual open when changing from automatic open to neutral. In this embodiment, this is not counted as the operated number of times of the operation switch 5a when changing from automatic open to manual open.

If judged that the window 100 is fully opened in s94, the control unit 2 stops the window opening instruction to the drive circuit (s98), and ends the present process. When detecting entrapment of foreign object by the window glass 101 in s95, the control unit 2 performs the processes of s39 to s41 described in the manual opening process in s99 to s101. Furthermore, if judged that the timed time of the timer has reached five seconds or longer in s96, the control unit 2 resets the counter counting the operated number of times of the operation switch 5a (s102), and returns to s94.

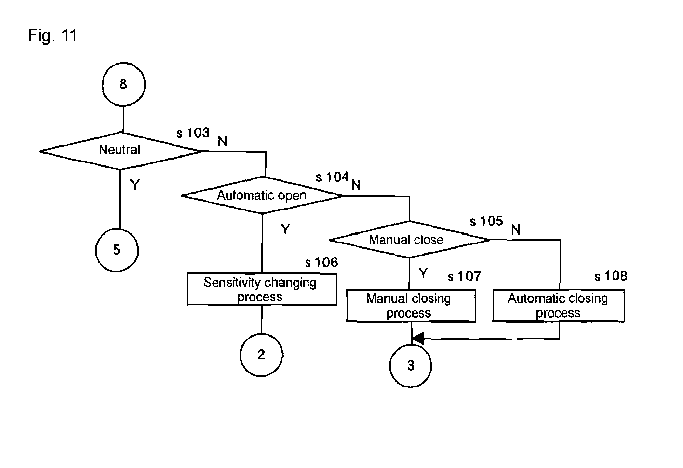

If judged that the operation state of the operation switch 5a is changed from manual open to another state in s97, the control unit 2 executes the processes shown in FIG. 11. Judgment is made on whether the changed operation state of the operation switch 5a is neutral, automatic open, manual close, or automatic close (s103 to s105). Judgment is made as automatic close if the changed operation state of the operation switch 5a is none of neutral, automatic open, or manual close. If the changed operation state of the operation switch 5a is neutral, the control unit 2 returns to s78. If the changed operation state of the operation switch 5a is automatic open, the control unit 2 executes the sensitivity changing process shown in FIG. 7 (s106), and returns to s64. Since the sensitivity changing process is performed in s106, judgment precision on whether or not the infant is playing with the operation switch 5a can be ensured. Moreover, if the changed operation state of the operation switch 5a is manual close or automatic close, the control unit 2 proceeds to the manual closing process or the automatic closing process corresponding to the relevant operation state (s107, s108).

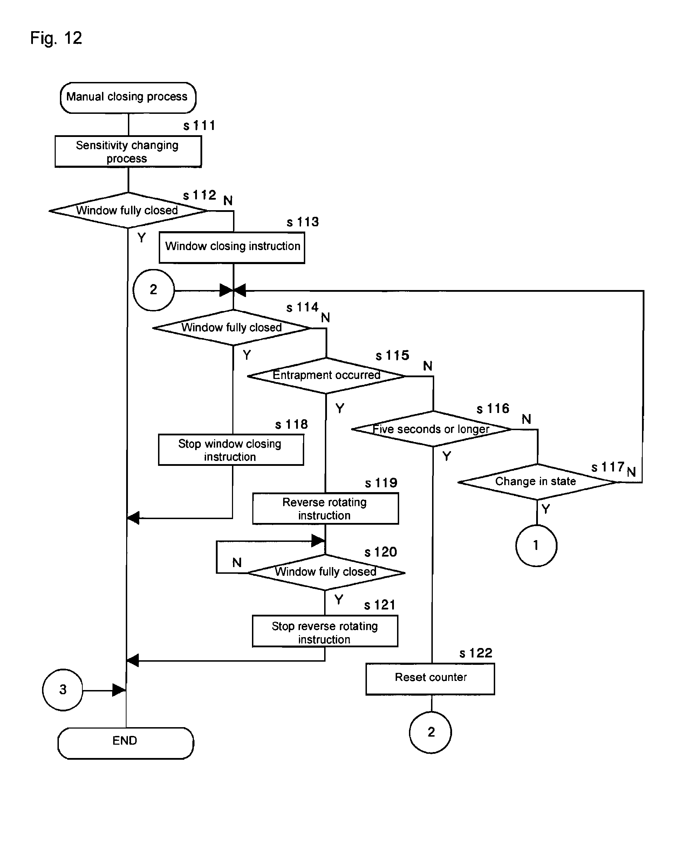

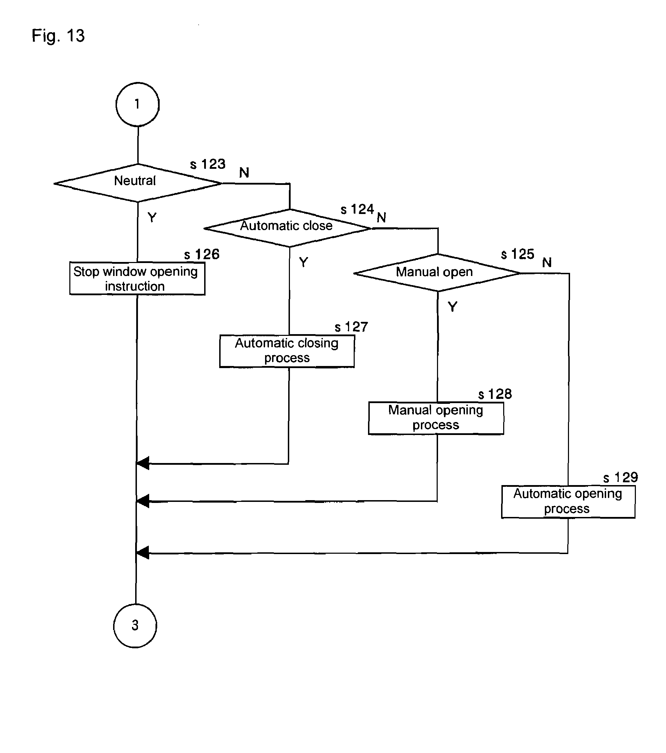

The manual closing process in the power window device of the present embodiment will now be described. FIGS. 12 and 13 show flowcharts of the manual closing process. The control unit 2 executes the sensitivity changing process shown in FIG. 7 (s111). The control unit 2 judges whether or not the window 100 is fully closed (s112). If the window 100 is fully closed, the control unit 2 ends the present process. If the window 100 is not fully closed, the control unit 2 makes the window closing instruction of instructing the drive circuit 3 to drive the motor 108 in the direction of closing the window 100, that is, in the direction of raising the window glass 101 (s113). The drive circuit 3 then drives the motor 108 to raise the window glass 101.

After performing the window closing instruction in s113, the control unit 2 waits until the window 100 is fully closed (s114), entrapment of foreign object by the window glass 101 occurs (s115), the timed time of the timer reaches five seconds or longer (s116), or the operation state of the operation switch 5a changes from the manual close to another state (s117). If judged that the window 100 is fully closed in s114, the control unit 2 stops the window closing instruction on the drive circuit 3 (s118), and ends the present process. The drive circuit 3 stops driving the motor 108 when the window closing instruction is stopped by the control unit 2. If judged that entrapment of foreign object by the window glass 101 occurred in s115, the control unit 2 makes reverse rotating instruction instructing the reverse rotation drive of the motor 108 to the drive circuit 3 (s119). While the window 100 is being closed, judgment that entrapment of foreign object by the window glass 101 has occurred is made when the foreign object such as finger or arm is entrapped by the window glass 101 being raised and the windowsill. In s119, instruction is made to the drive circuit 3 to drive the motor 108 in the direction of opening the window 100, that is, in the direction of lowering the window glass 101. The drive circuit 3 drives the motor 108 in the direction of lowering the window glass 101. The control unit 2 waits for the window 100 to be fully opened (s120), stops the reverse rotating instruction to the drive circuit 3 (s121), and ends the present process. Thus, if judged that entrapment of foreign object by the window glass 101 has occurred while closing the window 100, the control unit 2 fully opens the window 100. Therefore, the safety of when finger, arm, or the like is entrapped by the window glass 101 and the windowsill is ensured.

If judged that the timed time of the timer has reached five seconds or longer in s116, the control unit 2 resets the counter counting the operated number of times of the operation switch 5a (s122), and returns to s114. After the counter is reset in s122, the process of s122 is performed every time judgment in s116 is performed, but this does not arise any problem. Furthermore, the judgment process in s116 may not be performed after the counter is reset in s122. That is, after the counter is reset in s122, only the judgments in s114, s115, and s117 may be performed.

If judged that the operation state of the operation switch 5a is changed from the manual close to another state in s117, the control unit 2 executes the processes shown in FIG. 13. Judgment is made on whether the changed operation state of the operation state 5a is neutral, automatic close, manual open, or automatic open (s123 to s125). If the changed operation state of the operation switch 5a is neutral, the control unit 2 stops the window closing instruction to the drive circuit 3 (s126), and ends the present process. If the changed operation state of the operation switch 5a is one of automatic close, manual open, or automatic open, the control unit 2 proceeds to one of the automatic closing process, the manual opening process, or the automatic opening process corresponding to the relevant operation state (s127 to s412).

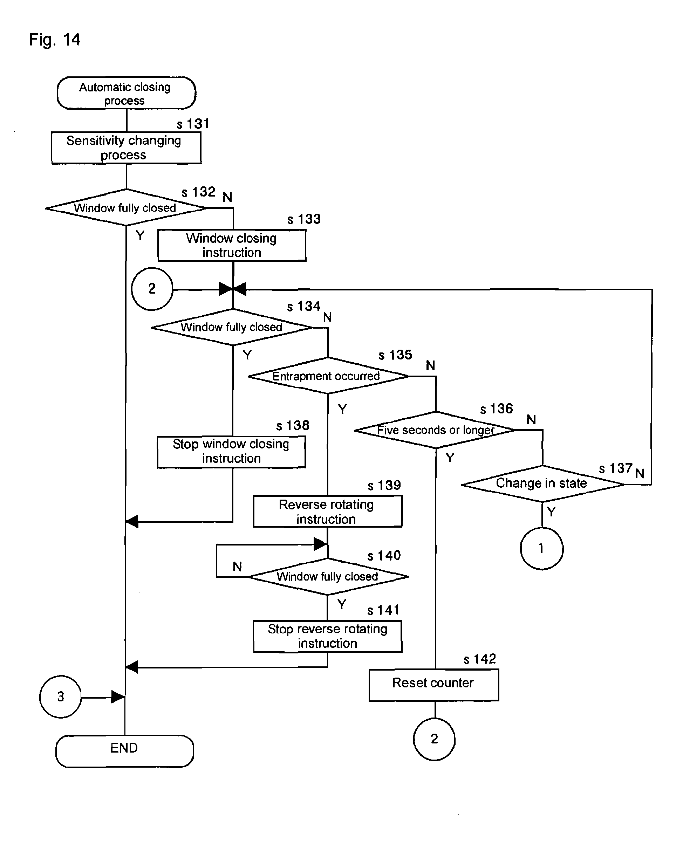

The automatic closing process in the power window device of the present embodiment will now be described. FIGS. 14 to 16 show flowcharts of the automatic closing process. The control unit 2 executes the sensitivity changing process shown in FIG. 7 (s131). The control unit 2 judges whether the window 100 is fully closed (s132), and ends the present process if the window 100 is fully closed. If the window 100 is not fully closed, the control unit 2 makes the window closing instruction instructing the drive circuit 3 to drive the motor 108 in the direction of closing the window 100 (s133). The drive circuit 3 then drives the motor 108 to lower the window glass 101. Subsequently, the control unit 2 performs the processes similar to s114 to s122 described in the manual closing process in s134 to s142. However, in s137, judgment is made on whether the operation state of the operation switch 5a is changed to the state other than automatic close.

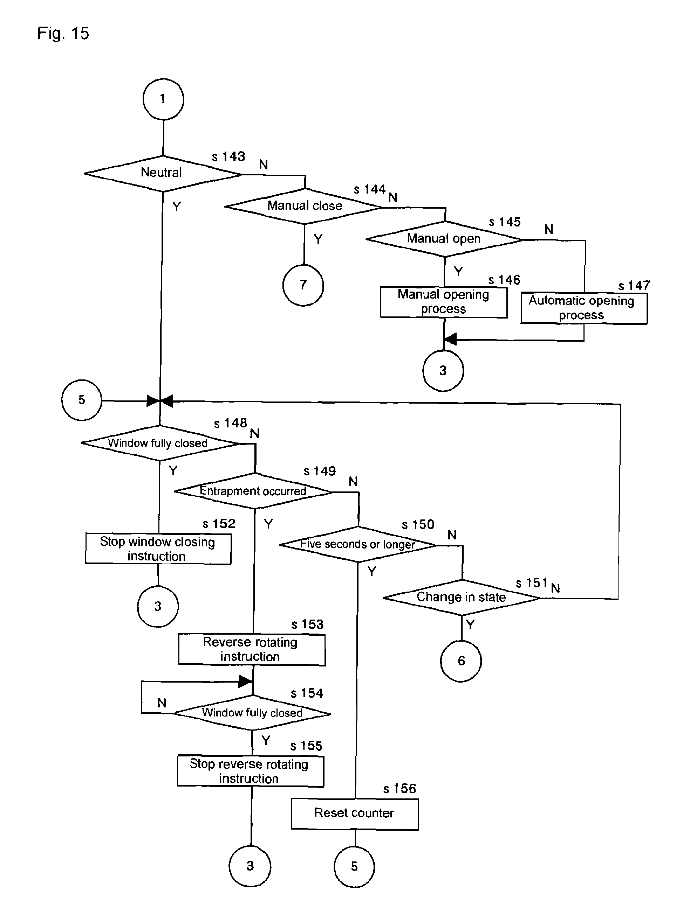

If judged that the operation state of the operation switch 5a is changed from automatic close to another state in s137, the control unit 2 executes the processes shown in FIG. 15. Judgment is made on whether the changed operation state of the operation state 5a is neutral, manual close, manual open, or automatic open (s143 to s145). If the changed operation state of the operation switch 5a is manual open or automatic open, the control unit 2 proceeds to the manual opening process or the automatic opening process corresponding to the relevant operation state (s146, s147). If the changed operation state of the operation switch 5a is neutral, the control unit 2 waits until the window 100 is fully closed (s148), entrapment of foreign object by the window glass 101 occurs (s149), the timed time of the timer timing the judgment time reaches five seconds or longer (s150), or the operation state of the operation switch 5a changes from neutral to another state (s151). If judged that the window 100 is fully closed in s148, the control unit 2 stops the window closing instruction to the drive circuit 3 (s152), and ends the present process. Furthermore, when detecting entrapment of foreign object by the window glass 101 in s149, the control unit 2 performs the processes in s119 to s121 described in the manual closing process in s153 to s155. Moreover, if judged that the timed time of the timer has reached five seconds or longer in s150, the control unit 2 resets the counter counting the operated number of times of the operation switch 5a (s156), and returns to s148.

A case when the changed operation state of the operation switch 5a is judged as manual open in s144 will be described hereinafter.

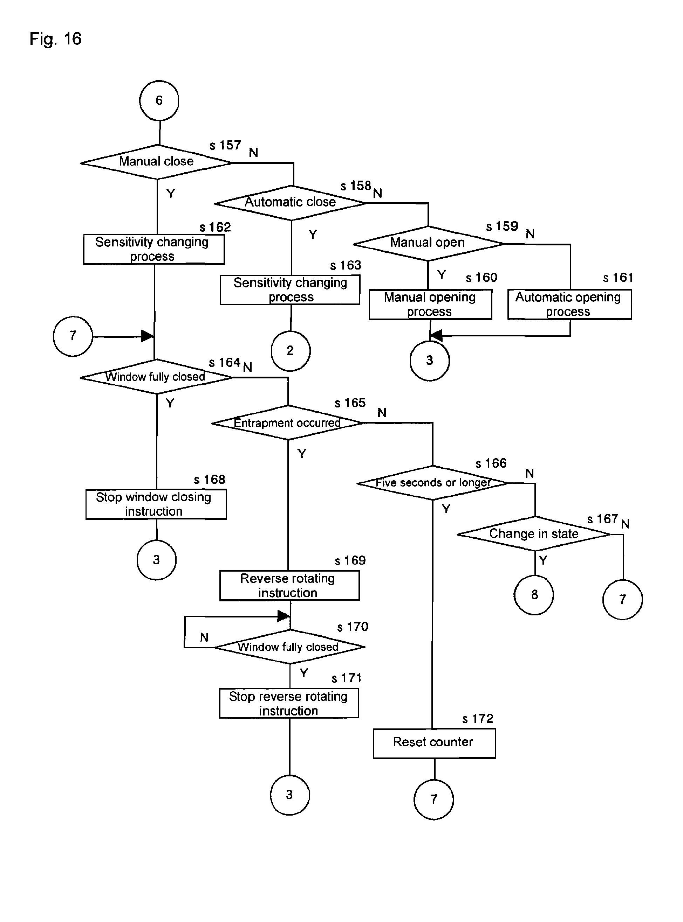

If judged that the operation state of the operation switch 5a is changed from neutral to another state in s151, the control unit 2 executes the processes shown in FIG. 16. Judgment is made on whether the changed operation state of the operation state 5a is manual close, automatic close, manual open, or automatic open (s157 to s159). If the changed operation state of the operation switch 5a is manual open or automatic open, the control unit 2 proceeds to the manual opening process or the automatic opening process corresponding to the relevant operation state (s160, s161). If the changed operation state of the operation switch 5a is automatic close, the control unit 2 executes the sensitivity changing process shown in FIG. 7 (s163), and returns to s134. Since the sensitivity changing process is performed in s163, the operated number of times of the operation switch 5a can be appropriately counted, and as a result, judgment precision on whether or not the infant is playing with the operation switch 5a can be ensured.

If the changed operation state of the operation switch 5a is manual close, the control unit 2 executes the sensitivity changing process shown in FIG. 7 (s162). The control unit 2 waits until the window 100 is fully closed (s164), entrapment of foreign object by the window glass 101 occurs (s165), the timed time of the timer timing the judgment time reaches five seconds or longer (s166), or the operation state of the operation switch 5a changes from manual close to another state (s167). Since the sensitivity changing process is performed in s162, judgment precision on whether or not the infant is playing with the operation switch 5a can be ensured. Furthermore, if judged that the changed operation state of the operation switch 5a is manual close in s134, the control unit 2 executes the processes after s164. Since the control unit 2 sometimes detects that the operation state of the operation switch 5a is temporarily at manual close when changing from automatic close to neutral, this is not counted as the operated number of times of the operation switch 5a when changing from automatic close to manual close.

If judged that the window 100 is fully closed in s164, the control unit 2 stops the window closing instruction to the drive circuit (s168), and ends the present process. When detecting entrapment of foreign object by the window glass 101 in s165, the control unit 2 performs the processes of s119 to s121 described in the manual closing process in s169 to s171. Furthermore, if judged that the timed time of the timer has reached five seconds or longer in s166, the control unit 2 resets the counter counting the operated number of times of the operation switch 5a (s172), and returns to s164.

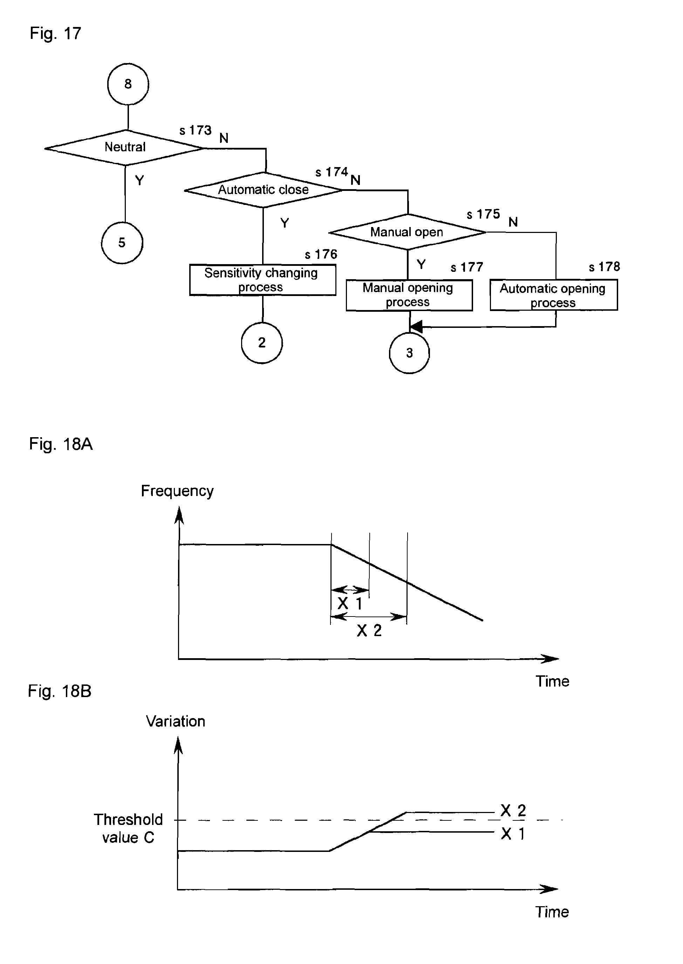

If judged that the operation state of the operation switch 5a is changed from manual close to another state in s167, the control unit 2 executes the processes shown in FIG. 17. Judgment is made on whether the changed operation state of the operation switch 5a is neutral, automatic close, manual open, or automatic open (s173 to s175). If the changed operation state of the operation switch 5a is neutral, the control unit 2 returns to s148. If the changed operation state of the operation switch 5a is automatic close, the control unit 2 executes the sensitivity changing process shown in FIG. 7 (s176), and returns to s134. Since the sensitivity changing process is performed in s176, judgment precision on whether or not the infant is playing with the operation switch 5a can be ensured. Moreover, if the changed operation state of the operation switch 5a is manual open or automatic open, the control unit 2 proceeds to the manual opening process or the automatic opening process corresponding to the relevant operation state (s177, s178).

Therefore, the power window device 1 of the present embodiment judges whether or not entrapment of foreign object by the window glass 101 has occurred by detecting the load variation of the motor 108 in the manual opening process, the automatic opening process, the manual closing process, and the automatic closing process described above. Furthermore, if the operation switch 5a is operated for greater than or equal to a predetermined number of times within the predetermined time, judgment is made that the infant is playing with the operation switch 5a, and the threshold value C used in judging whether or not entrapment of foreign object by the window glass 101 has occurred is changed from the normal value to the play value to raise the sensitivity for judging whether or not entrapment by the window glass 101 has occurred. Therefore, whether or not entrapment of foreign object by the window glass 101 has occurred is judged with the raised sensitivity if the infant is playing with the operation switch 5a, whereby safety with respect to playing of operation switch of the infant is ensured. Moreover, increase in cost of the main body can be suppressed since judgment on whether the infant is playing with the operation switch 5a is performed with software. If the infant is not playing with the operation switch 5a, whether or not entrapment of foreign object by the window glass 101 has occurred is judged with the normal sensitivity, and thus occurrence frequency of mistaken judgment of judging that entrapment of foreign object has occurred although entrapment of foreign object by the window glass 101 has not occurred can be suppressed and user-friendliness will not be lowered.

In the power window device 1 of the present embodiment, the ignition switch is once turned OFF to return the threshold value C to the normal value when the threshold value C is set to the play value, but the following configuration may be adopted.
(1) The threshold value C is returned from the play value to the normal value when the operation switch 5a has not been operated for longer than or equal to a predetermined time.
(2) The threshold value C is returned from the play value to the normal value after a predetermined time has elapsed from when the threshold value C is set to the play value.
(3) The threshold value C is returned from the play value to the normal value after a predetermined time has elapsed from when the window 100 is fully opened or fully closed.

In the above embodiment, the sensitivity is raised by changing the threshold value C from the normal value to the play value, but the threshold value C does not need to the changed, and the following configuration may be adopted.
As shown in FIG. 18, when calculating the load variation of the motor 108, a difference between the load at the relevant point and the load earlier by normal time (X1) may be taken during normal times, and a difference between the load at the relevant point and the load earlier by played time (X2), which is longer than normal time (X1), be taken during played time. FIG. 18A shows the frequency of the pulse signal obtained by waveform shaping the output signal of the encoder 108a in the pulse detector 4 with respect to time axis, and FIG. 18B shows variation in load detected with respect to frequency variation shown in FIG. 18A. According to such configuration, the sensitivity can be raised, the safety with respect to playing of operation switch of the infant can be ensured, and increase in cost of the main body can be suppressed. User-friendliness can also be ensured. In this case, s1 shown in FIG. 3 is changed to the process of setting to the normal time X1, and s56 shown in FIG. 7 is changed to the process of setting to the played time X2.

Another embodiment of the present invention will now be described. In the embodiment described above, the sensitivity is raised if judged that the infant is playing with the operation switch 5a, and whether or not entrapment of foreign object by the window glass 101 has occurred is judged, but in the present embodiment, the movement speed of the window glass 101 during the opening/closing operation of the window 100 is set lower than normal if judged that the infant is playing with the operation switch 5a.

Specifically, when making the opening/closing instruction to the drive circuit 3, the control unit 2 instructs the first electric energy or the second electric energy as the electric energy supplied to the motor 108 per unit time. The first electric energy is larger than the second electric energy. The drive circuit 3 supplies the power of the first electric energy or the second electric energy instructed by the control unit 2 and drives the motor 108. Therefore, the rotation speed of the motor 108 is at higher speed when the power of the first electric energy is being supplied.

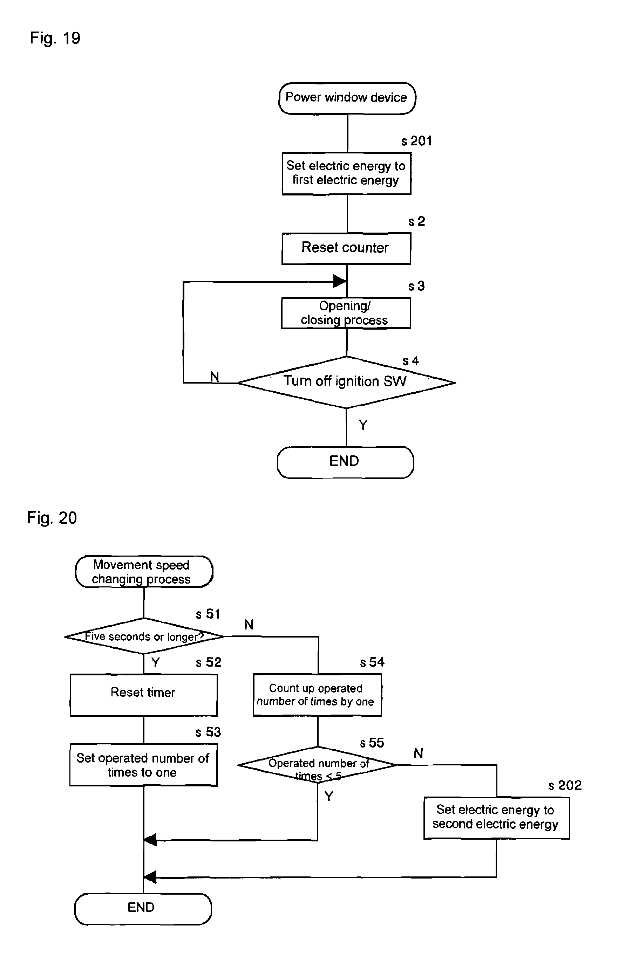

The power window device 1 executes the process shown in FIG. 19 when the ignition switch is turned ON. The processes shown in FIG. 19 are the same as FIG. 3 except that s1 of FIG. 3 described in the above embodiment is changed to a process (s201) of setting the electric energy supplied to the motor 108 per unit time to the first electric energy. Furthermore, a movement speed changing process shown in FIG. 20 is executed in place of the sensitivity changing process in the above embodiment. The processes shown in FIG. 20 are the same as FIG. 7 except that s56 of FIG. 7 is changed to a process (s202) of setting the electric energy supplied to the motor 108 per unit time to the second electric energy.

If judged that the infant is playing with the operation switch 5a, the movement speed of the window glass 101 when opening/closing the window 100 is made lower than normal. Therefore, safety with respect to playing of operation switch of the infant can be ensured, and increase in cost of the main body can be suppressed. User-friendliness is also ensured.

In this case, the sensitivity changing process in the manual opening process, the automatic opening process, the manual closing process, and the automatic closing process described in the above embodiment is replaced with the movement speed changing process shown in FIG. 20.

If judged that the infant is playing with the operation switch 5a, the movement speed of the window glass 101 is set to be lower than normal in the manual closing process and the automatic closing process, and the movement speed of the window glass 101 is not set to low speed in the manual opening process and the automatic opening process.

If judged that the infant is playing with the operation switch 5a, the control unit 2 may prohibit all of the manual opening process, the automatic opening process, the manual closing process, and the automatic closing process, or may prohibit the manual closing process and the automatic closing process and allow the manual opening process and the automatic opening process.
The safety with respect to playing of operation switch of the infant is still ensured and increase in cost of the main body is suppressed. User-friendliness is also ensured.

If judged that the infant is playing with the operation switch 5a, a warning lamp may light up or a notification may be made by warning sound. For instance, the room lamp may be light up as the warning lamp, or the hazard lamp may light up as the warning lamp. The horn may be honked as the warning sound.

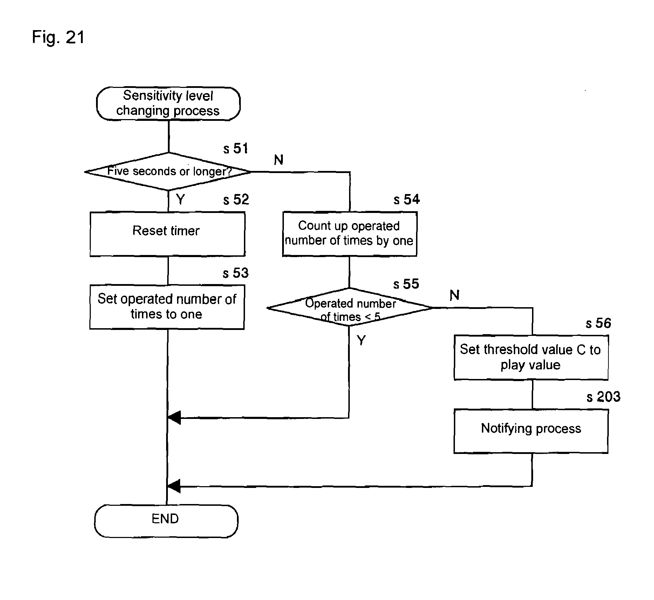

In this case, the sensitivity changing process shown in FIG. 7 may be the process shown in FIG. 21. The sensitivity changing process shown in FIG. 21 is the same as FIG. 7 but a step (s203) of notifying playing of operation switch by the infant is added following s56. The playing of operation switch by the infant is thus rapidly notified to the guardians. That is, the guardians can rapidly respond to the playing of operation switch by the infant. Therefore, similar to the above embodiment, the safety with respect to playing of operation switch of the infant is ensured, and increase in cost of the main body is suppressed. User-friendliness is also ensured.

s203 is executed following s56, but may be executed in place of s56. Furthermore, s203 may be executed following s202 shown in FIG. 20, or may be executed in place of s202.

The present invention has been applied to the power window device in the above embodiment, but the present invention is also applicable to a device for opening/closing sunroofs, and the like.

The window glass 101 may be stopped instead of being reverse rotation driven if judged that entrapment has occurred. The judgment on whether or not entrapment has occurred, or reverse rotation drive or stopping of the window glass 101 if judged that entrapment has occurred may be prohibited in the manual opening process and the automatic opening process, and performed only in the manual closing process and the automatic closing process.

## Claims

1. A control device for opening/closing member comprising:
a movement instruction outputting unit for outputting a movement instruction of the opening/closing member according to an operation of an operation switch;
a driving unit for driving a motor and moving the opening/closing member based on the movement instruction of the opening/closing member output by the movement instruction outputting unit;
an entrapment judging unit for judging whether or not entrapment of foreign object by the opening/closing member has occurred when the opening/closing member is being moved by the motor with a sensitivity set at a relevant point as a reference;
a drive limiting unit for instructing the driving unit to stop the drive of the motor or drive in reverse rotation of the motor if judged that entrapment of the foreign object by the opening/closing member has occurred by the entrapment judging unit; and
a sensitivity changing unit for raising the sensitivity for judging that entrapment of the foreign object by the opening/closing member has occurred by the judging unit when the operation switch is repeatedly operated over greater than or equal to a predetermined number of times within a predetermined time.

2. A control device for opening/closing member according to claim 1, wherein
the sensitivity changing unit is a unit for changing the sensitivity of a load variation of the motor used in judging whether or not entrapment of the foreign object by the opening/closing member has occurred ; and
the entrapment judging unit is a unit for judging whether or not entrapment of the foreign object by the opening/closing member has occurred based on whether the load variation of the motor exceeds the sensitivity of the load variation of the motor set at the relevant point.

3. A control device for opening/closing member comprising:
a movement instruction outputting unit for outputting a movement instruction of the opening/closing member according to an operation of an operation switch;
a driving unit for driving a motor and moving the opening/closing member based on the movement instruction of the opening/closing member output by the movement instruction outputting unit; and
a drive limiting unit for limiting the movement instruction of the opening/closing member corresponding to the operation of the operation switch output by the movement instruction outputting unit when the operation switch is repeatedly operated over greater than or equal to a predetermined number of times within a predetermined time.

4. A control device for opening/closing member according to any one of claims 1 to 3, further comprising a notifying unit for notifying when the operation switch is repeatedly operated for greater than or equal to the predetermined number of times within the predetermined time.
